(19) Europäisches Patentamt
European Patent Office
Office européen des brevets

(11) Publication number: **0 427 295 A1**

(12) **EUROPEAN PATENT APPLICATION**

(21) Application number: **90121622.6**

(22) Date of filing: **14.05.86**

(51) Int. Cl.5: **C08G 18/22**, D06N 7/00, //(C08G18/22,101:00)

This application was filed on 12 - 11 - 1990 as a divisional application to the application mentioned under INID code 60.

(30) Priority: **28.05.85 US 737984**

(43) Date of publication of application: **15.05.91 Bulletin 91/20**

(60) Publication number of the earlier application in accordance with Art.76 EPC: **0 223 826**

(84) Designated Contracting States: **DE FR GB IT NL**

(71) Applicant: **THE DOW CHEMICAL COMPANY**
**2030 Dow Center Abbott Road**
**Midland, MI 48640(US)**

(72) Inventor: **Meyer, Louis W.**
**103 Aster Lane**
**Lake Jackson, Texas 77566(US)**
Inventor: **McKinney, Linda M.**
**56 White Oak Court**
**Lake Jackson, Texas 77566(US)**
Inventor: **Kelley, Don H.**
**124 Flag Drive West**
**Lake Jackson, Texas 77566(US)**

(74) Representative: **Huber, Bernhard, Dipl.-Chem. et al**
**Patentanwälte H. Weickmann, Dr. K. Fincke F.A. Weickmann, B. Huber Dr. H. Liska, Dr. J. Prechtel Möhlstrasse 22 Postfach 860 820**
**W-8000 München 86(DE)**

(54) **A process for preparing a polyurethane backed substrate.**

(57) Process for preparing a polyurethane backed substrate whereby a polyurethane forming mixture comprising at least one polyahl, at least one polyisocyanate and at least one catalyst for the urethane forming reaction is applied to a substrate and subsequently curing thereon to form an attached polyurethane backing. The process is characterized by employing as the catalyst an organobismuth catalyst. The organobismuth catalyst is advantageously employed in an amount such that the polymer-forming mixture exhibits the viscosity of not greater than 20,000 cps (20 Pa.s) 2 minutes after the polyahl and the polyisocyanate are contacted in the presence of said organobismuth catalyst at a temperature between 20 and 50 °C and the polyurethane forming mixture cures at a temperature between 100 and 150 °C to a tack free state in less than 8 minutes after the polyahl and the polyisocyanate are contacted in the presence of said organobismuth catalyst.

EP 0 427 295 A1

# A PROCESS FOR PREPARING A POLYURETHANE BACKED SUBSTRATE

This invention relates to a process for preparing polyurethane backings for substrates, more particularly to a process for preparing polyurethane backings for carpet which exhibit desirable curing times.

Polyurethane backings are commercially applied to a variety of substrates, the most significant of which are floor and wall coverings such as carpet. One commonly used procedure for preparing such a backing is to position the substrate with its underside up, place a pool or puddle of a liquid urethane forming reaction mixture on to the substrate, gauge the reaction mixture with a doctor blade or similar device to form a film and then cure the gauged film. The liquid urethane reaction mixture is generally applied to the substrate at approximately ambient or slightly elevated temperatures (i.e. 20-50 °C). However, since the reaction mixture contains catalyst, it often begins to cure before it is gauged.

This curing presents several problems. As the viscosity of the curing reaction mixture rises, it becomes more difficult to gauge the film.

The curing reaction mixture also sticks to the coating apparatus and forms "strings" which disrupt the uniformity of the backing. In addition, this premature curing of the reaction mixture decreases the adhesion of the urethane backing to the substrate, since the higher viscosity thereof reduces the penetration of the reaction mixture into the surface of the substrate.

On the other hand, it is highly desirable from an economics standpoint that the urethane backing cure as quickly as possible once it is gauged and heated to the proper curing temperature. Long cure times delay further processing steps in the production of the backed substrate. Generally, it is desired that the reaction mixture cure to a tack-free state in 10 minutes or less at the desired curing temperature.

Generally, control of the rate of the curing reaction is effected by the use of catalysts. Catalysts such as organotin catalysts and tertiary amine catalysts have been conventionally used in preparing polyurethane carpet backing. Unfortunately, however, the use of these catalysts in conventional amounts generally causes the polyisocyanates and isocyanate-reactive materials to react too rapidly to permit the application and gauging steps to be carried out. Accordingly, it has been attempted to slow the rate of cure simply by reducing the amount of the catalyst used. Although this does sufficiently retard the cure to permit the application and gauging steps, it also substantially increases the time required to cure the mixture to a tack-free state. In addition, using lower levels of these catalysts causes the polyurethane to inadequately adhere to the substrate. Other catalysts, such as mercury and lead catalysts, provide desirable reactivities but are undesirable due to their substantial toxicity.

It would therefore be desirable to provide a catalyst for a polyurethane backing formulation which provides a desired rate of reaction and produces a polyurethane backing which adequately adheres to the substrate.

This invention is a process for preparing a polyurethane backed substrate whereby a polyurethane forming mixture comprising at least one polyahl, at least one polyisocyanate and at least one catalyst for the urethane forming reaction is applied to a substrate and subsequently cured thereon to form an attached polyurethane backing. The process is characterized by employing as the catalyst an organobismuth catalyst. The organobismuth catalyst is advantageously employed in an amount such that the polymer-forming mixture exhibits a viscosity of not greater than 20,000 cps (20 Pa•s) 2 minutes after the polyahl and the polyisocyanate are contacted in the presence of said organobismuth catalyst at a temperature between 20 and 50 °C, and the polyurethane forming mixture cures at a temperature between 100 and 150 °C to a tack free state in less than 8 minutes after the polyahl and the polyisocyanate are contacted in the presence of said organobismuth catalyst.

The use of the organobismuth catalyst according to this invention provides a polyurethane reaction mixture which cures sufficiently slowly at ambient temperature or slightly elevated temperature to enable the practitioner to apply and gauge the reacting mixture onto a substrate such as a carpet, and which also becomes tack free in a relatively short period of time. In addition, this invenstion provides a method whereby excellent binding of the backing to the substrate is achieved. When a carpet or other material comprising a substrate having a pile woven or tufted therethrough is coated according to its invention, it provides the further advantage of securing the woven or tufted pile to the substrate.

In this invention, a polyurethane forming material is catalyzed with an organobismuth catalyst and applied to form a layer on a substrate.

Preferably, the organobismuth catalyst useful herein is represented by the formula

$MR^1R^2R^3$

wherein M is bismuth, and each $R^1$, $R^2$ and $R^3$ independently represents an organic radical which contains no substituent groups which adversely interfere with the reaction of an isocyanate group and an active

hydrogen containing material. Each $R^1$, $R^2$ and $R^3$ is advantageously alkyl, a saturated or unsaturated carboxyalkyl, or a a pentanedione anion, i.e.

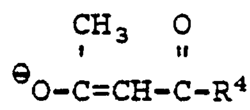

wherein $R^4$ is alkyl, inertly substituted alkyl, or an inertly substituted derivative thereof.

Preferred catalysts are the bismuth carboxylates.

The most preferred bismuth catalyts are bismuth salts of $C_8$-$C_{22}$ carboxylic acids, particularly the $C_8$-$C_{18}$ carboxylic acids, and especially $C_8$-$C_{12}$ branched, saturated, tertiary carboxylic acids. An exemplary bismuth catalyst of the most preferred type is commercially available as Coscat 83. Coscat is the registered trademark of the Cosan Chemical Corporation.

The particular amount of catalyst employed will depend, of course, upon the temperature at which the polyurethane forming mixture is reacted as well as a particular polyols and polyisocyanates employed therein. In general, a lesser amount of catalyst is required when higher temperatures are employed or when the polyahl comprises an amine functional compound. By contrast, at lower polymerization temperatures, or when polyols are employed, somewhat greater amounts of catalysts may be necessary. Preferably, from 0.001 to 0.2 percent by weight of the organobismuth catalyst, based on the weight of polyahls employed in the polyurethane forming mixture, are suitable to provide the desired reactivity. More preferably, the amount of catalyst is from 0.005 to 0.1 weight percent.

Optionally, the polyurethane forming mixture contains other known catalysts for the urethane forming reaction. Such catalysts are advantageously those that are known to be temperature dependent, thus providing a controllable reactivity. Suitable catalysts include, for example, dimethyltin bis(isooctylmercapto acetate), di-n-butyltin bis(isooctylmercapto acetate) and dioctyltin bis(isooctylmercapto acetate). when employed, these catalysts are used at a level from 0.001 to 0.2 percent by weight, preferably 0.002 to 0.1 percent by weight, based on the weight of polyahls employed in the polyurethane forming mixture.

The term "polyahl" as employed herein refers to any compound having a plurality of hydrogen atoms which due to their position on the molecule display significant activity according to the Zerewitnoff test described by Kohler in the Journal of American Chemical Society Vol. 49, page 3181 (1927). Suitable such polyols include, for example, polyols, polyamines, polymercaptans, and polyacids, with polyamines and polyols in particular being preferred. Polyols are most preferred. Said polyahl advantageously has an active hydrogen functionality from 2 to 8, preferably from 2 to 3, and more preferably 2.0 to 2.2. Especially suitable polyahls include polyether polyols, polyester polyols, the so-called copolymer polyols and amine terminated polyethers.

Preferably, a mixture of at least one relatively high equivalent weight polyahl and at least one relatively low equivalent weight polyahl are employed in the polyurethane forming mixture. Said relatively high equivalent weight polyahl advantageously has an active hydrogen equivalent weight from 500 to 5000, preferably from 600 to 2000. Said relatively low equivalent weight polyahl advantageously has an active hydrogen equivalent weight of less than 400; preferably less than 200 and includes materials such as, for example, ethylene glycol, tripropylene glycol, propylene glycol, 1,4-butane diol, diethylene glycol, 1,3-propane diol, triethylene glycol, tetraethylene glycol, tetrapropylene glycol, 4,4′-diaminodiphenylmethane, 3,3′-dichloro-4,4′-diaminodiphenyl methane, 4,4′-diaminobiphenyl, trimethyolpropane, and mixtures thereof. Mixtures of polyahls which are suitable for preparing backings for substrates and particular for preparing carpet backing are described in a number of patents including for example U.S. Patent Nos. 3,755,212, 3,862,879, 3,821,130, 3,821,067, 4,296,159, and 4,483,894.

A preferred polyol mixture comprises a substantially difunctional poly(propylene oxide) having an equivalent weight from 600 to 2000 which may be capped with ethylene oxide, and a polyhydroxyl-containing low equivalent weight polyahl having a functionality of about 2. In an especially preferred system, substantially all of the polyahls employed in the polyurethane forming mixture are substantially difunctional.

The polyurethane forming mixture further comprises at least one polyisocyanate. Suitable polyisocyanates for use herein are organic polyisocyanates containing from 2 to 4, preferably from 2 to 3 isocyanate or isothiocyanate groups per molecule or mixture thereof. Suitable polyisocyanates include for example, m-phenylene diisocyanate, toluene-2,4-diisocyanate, toluene-2,6-diisocyanate, hexamethylene-1,6-diioscyanate, tetramethylene-1,4-diisocyanate, cyclohexane-1,4-diisocyanate, hexahydrotoluene diisocyanate (and isomers thereof), naphthlene-1,5-diizocyanate, 1-methoxyphenyl-2,4-diisocyanate, diphenylmethane-4,4′-diisocyanate, and 4,4′-diphenylene diisocyanate, 3,3′-dimethoxy-4,4′-diphenyldiisocyanate, 3,3′-dimethyl-4,4′-diphenyl diisocyanate, and 3,3′-dimethyldiphenylpropane-4,4′-diisocyanate, and diverse polymethylene polyphenyl polyisocyanates. Crude polyisocyanates may also be employed herein such as the crude toluene diisocyanate obtained by the phosgenation of a mixture of toluene diamines or the crude diphenyl methylene diisocyanate obtained by the phosgenation of crude diphenyl methylene diamine. Suitable such crude polyisocyanates are disclosed in U.S. Patent No. 3,215,652. Of the fore-going, preferred are aromatic diisocyanates such as toluene diisocyanate and diphenylmethane diisocyanate or mixtures of the latter having an average functionality from 2.0 to 2.7. Most preferred are diphenylmethane diisocyanate, or derivatives thereof having an average functionality from 2.0 to 2.2. These most preferred polyisocyanates are known in the art to be especially difficult to catalyze to obtain the proper reactivity.

The polyisocyanate is generally employed in an amount such that there are provided from 0.9 to 1.3, preferably from 0.95 to 1.15 equivalents of isocyanate per equivalent of reactive hydrogen present in the polyurethane forming mixture.

In addition to the forementioned polyahls and polyisocyanates, the polyurethane reaction mixture also advantageously and preferably contains a quantity of an inorganic filler such as, for example, calcium carbonate, alumina trihydrate, antimony trioxide, titanium dioxide, carbon black or mixtures thereof. Said inorganic filler is employed in an amount ranging from 0 to 500 parts by weight per 100 parts by weight of polyahls employed in the urethane forming mixture and preferably from 40 to 400 parts per 100 parts of polyahl.

In addition, various components such as flame retardants including halogenated hydrocarbons, and phosphate esters; pigments; antioxidants, preservatives and other additives known to be useful in forming polyurethanes may optionally be employed herein. If desired, the polyurethane forming material and hence the polyurethane backing may be frothed or foamed according to processes described in U.S. Patent Nos. 3,821,130, 3,862,879 and 4,296,159. Such frothing is generally obtained by mechanically inducing an inert gas into the foam forming composition. A foam backing is typically provided by employing a blowing agent such as a low boiling halogenated hydrocarbon, water or other gas-producing substance into the polyurethane reaction mixture.

Suitable processes for applying a polyurethane backing to a substrate are disclosed, for example, in U.S. Patent Nos. 4,278,482 and 4,397,978.

The polyurethane reaction mixture is advantageously applied to a substrate by forming a mixture of the polyahls, polyisocyanates, catalyst as described herein and other optional components as desired, contacting said mixture with at least one surface of said substrate and gauging the applied polyurethane reaction mixture to form a layer of desired thickness. Said gauging operation is advantageously performed with an apparatus such as a doctor blade or cutting blade which in addition to adjusting the thickness of the layer also effects the penetration of the layer into the underlying substrate. This is of particular importance when the substrate is a carpet wherein excellent penetration of the reacting polyurethane reaction mixture into the fibers of the carpet is desirable. Before or after contact with the substrate, the polyurethane reaction mixture is advantageously heated to an elevated temperature to promote curing. The temperature used for curing will depend somewhat on the particular reactants employed, the level of catalyst and the desired rate of reaction. Advantageously it is from 50 to 200°C, preferably from 100 to 150°C, more preferably from 110° to 130°C. The use of the catalyst employed in this invention permits the temperature and other parameters to be adjusted such that the desired cure times are achieved while also providing a desirable tack free time and providing a backing which strongly adheres to the substrate.

In the preparation of carpet tile, the polyurethane backing may be employed as a series of two or more layers which may in turn be interposed by one or more fiberglass or polyethylene scrims. In such carpet tiles, the total weight of the polyurethane backing is advantageously from 15 to 100 ounces per square yard (0.51 to 3.39 kg/$m^2$).

The following examples are intended to illustrate the invention but not to limit the scope thereof. All parts and percentages are by weight unless otherwise indicated.

Examples 1 A, B and C

Six polyurethane backed carpet samples are prepared, Example 1 being prepared according to this invention and Comparative Runs A, B and C being prepared according to conventional processes.

In Example 1 a bismuth salt of "Versatic" acid (a mixture of saturated tertiary $C_9$-$C_{11}$ monocarboxylic acids) is employed at a level of 0.06 parts by weight. Comparative Run A uses as a catalyst dimethyl tin dilaurate at a concentration of 0.03 parts by weight. Comparative Run B also uses dimethyltindilaurate at a concentration of 0.01 parts by weight. Comparative Run C is prepared using nickel acetylacetonate as a

catalyst at a concentration of 0.03 parts by weight.

In preparing each of the Examples and Comparative Runs the following general procedure is employed:

To a suitable beaker is added 85 grams of a liquid polyoxypropylene glycol having an equivalent weight of 1000 and a hydroxyl functionality of 2. To this is added 15 grams of dipropylene glycol, 100 grams of alumina trihydrate and 105 grams of calcium carbonate. These materials are thoroughly mixed and then blended with 63 grams of an isocyanate-terminated prepolymer which is prepared by reacting 86 parts methylene diphenyldiisocyanate with 14 parts of tripropylene glycol. This prepolymer has an -NCO content of 23 percent and an isocyanate equivalent weight of 180. The resulting reaction mixture has an -NCO:OH ratio of 1.1 (110 index). After blending the prepolymer with the polyol mixture, 1 gram of a 2000 molecular weight polyoxypropylene glycol solution containing the indicated amount of catalyst is blended in. The reaction mixture is then doctored unto the back of a commercial grade carpet made of nylon fibers weighing 22 ounces per square yard (0.75 $kg/m^2$) tufted through a woven polypropylene primary backing at the rate of 7.5 stitches per inch (0.30 stitches per mm). This carpet has a pile height of 1.56 inches (39.6 mm) and a griege weight of 25 ounces per square yard (0.85 $kg/m^2$). After applying the reaction mixture to the carpet, it is allowed to cure at 120° C. The time required for the reaction mixture to reach 20,000 cps (20 Pa•s) viscosity (at room temperature) (using Brookfield viscometer using a No. 4 spindle at 6 revolutions per minute), and the tack free time are measured. After complete curing, the tuft lock is tested according to Federal Test Method Standard DFL-22. The time required to reach 20,000 cps (20 Pa•s) viscosity, the tack free time and the tuft lock for each of Example 1 and Comparative Runs A, B, and C are reported in the following table.

TABLE

| Example and Comparative Runs | Catalyst | Catalyst Conc., wt% | Reactivity[1], min. | Tack free[2] time, min. | Tuft Lock, lbf (N) |
|---|---|---|---|---|---|
| 1 | bismuth carboxylates[3] | 0.06 | 5.5 | 5.5 | 24 (107) |
| A | dimethyltin dilaurate | 0.03 | 1.5 | 4 | 22 (98) |
| B | dimethyltin dilaurate | 0.01 | 5.0 | 4 | 16 (71) |
| C | nickel acetylacetonate | 0.03 | 20 | >10 | 10 (44) |

[1]Time required to reach 20,000 cps (20 Pa•s) at room temperature.

[2]Time required to achieve a tack-free state at 120° C.

[3]Bismuth salt of $C_9$-$C_{11}$ saturated tertiary carboxylic acid.

It can be seen from the data indicated in the Table that only the organobismuth catalysts, provides desirable reactivities and tack-free times and still provides excellent tuft lock as well.

## Claims

1. A process for preparing a polyurethane backed substrate whereby a polyurethane forming mixture comprising at least one polyahl, at least one polyisocyanate, and at least one catalyst for the urethane forming reaction is applied to a substrate and subsequently cured thereon to form an attached polyurethane backing, characterized by employing as the catalyst an organobismuth catalyst.

2. The process of Claim 1 characterized in that the organobismuth compound is a bismuth carboxylate.

3. The process of Claim 2 characterized in that the bismuth carboxylate is a bismuth salt of a $C_8$-$C_{12}$ branched carboxylic acid.

4. The process of Claim 1 characterized in that the organobismuth catalyst is employed in an amount from 0.001 to 0.2 percent by weight based on the weight of the polyahls employed in the polyurethane forming mixture.

5. The process of Claim 4 characterized in that the organobismuth catalyst is employed in an amount from 0.005 to 0.1 percent by weight based on the weight of the polyahls in the polyurethane forming mixture.

6. The prooess of Claim 1 characterized in that the polyahl is a mixture of polyahls having an active hydrogen functionality from 2 to 8 comprising at least one relatively high equivalent weight polyahl having an active hydrogen equivalent weight from 500 to 5000 and at least one relatively low equivalent weight polyahl having an active hydrogen equivalent weight of less than 400.

7. The process of Claim 1 characterized in that the polyisocyanate is a prepolymer or quasi prepolymer prepared by reacting an excess of diphenylmethane diisocyanate or derivative thereof with a low equivalent weight polyahl.

8. The process of Claim 1 characterized in that the polyurethane forming mixture further contains at least one inorganic filler.

European Patent Office

# EUROPEAN SEARCH REPORT

Application Number

**EP 90 12 1622**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-1 926 285 (SCHOLTEN RESEARCH)<br>* Claim 1; page 8, lines 24-34 * | 1,2,4-8 | C 08 G 18/22<br>D 06 N 7/00 //<br>(C 08 G 18/22<br>C 08 G<br>101:00 ) |
| Y | FR-A-1 294 010 (M.M.M.)<br>* Abstract point 1; page 2, right-hand column, paragraphs 1,5; page 4, table 1 * | 1,2,4-8 | |
| A | FR-A-1 243 115 (U.C.C.)<br>* Abstract point 1; page 3, left-hand column, paragraph 4 - page 4, left-hand column, paragraph 2 * | 1,3 | |

TECHNICAL FIELDS SEARCHED (Int. Cl.5)

C 08 G
D 06 N

The present search report has been drawn up for all claims

| Place of search | Date of completion of search | Examiner |
|---|---|---|
| The Hague | 28 January 91 | VAN PUYMBROECK M.A. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document